# EUROPÄISCHE PATENTSCHRIFT

(11) **EP 3 753 463 B1**
(45) Veröffentlichungstag und Bekanntmachung des Hinweises auf die Patenterteilung: **10.05.2023**
(21) Anmeldenummer: 19180533.2
(22) Anmeldetag: 17.06.2019
(51) Int. Cl.: A47L 9/14

(54) **STAUBSAUGERFILTERBEUTEL FÜR EINEN HANDSTAUBSAUGER**
VACUUM CLEANER FILTER BAG FOR A HAND VACUUM CLEANER
SAC FILTRANT D'ASPIRATEUR POUR UN ASPIRATEUR PORTABLE

(43) Veröffentlichungstag der Anmeldung: 23.12.2020
(73) Patentinhaber: Eurofilters Holding N.V., 3900 Overpelt (BE)
(72) Erfinder: SCHULTINK, Jan, 3900 Overpelt (BE); SAUER, Ralf, 3900 Overpelt (BE)
(74) Vertreter: Grünecker Patent- und Rechtsanwälte PartG mbB

(56) Entgegenhaltungen:
- EP-A1- 2 452 603
- WO-A1-2006/025249
- DE-A1-102017 111 837
- DE-U1-202018 102 370
- JP-A- 2001 204 661

## Beschreibung

Die Erfindung betrifft einen Staubsaugerfilterbeutel, insbesondere einen Staubsaugerfilterbeutel für einen Handstaubsauger und/oder einen sogenannten Stick-Staubsauger, insbesondere für kabellose Modelle.

Stick-Staubsauger sind meist, jedoch nicht immer, schnurlose Geräte (Akkusauger) bei denen eine Elektrobürste über ein Saugrohr ohne Saugschlauch mit dem eigentlichen Gehäuse des handgehaltenen Staubsaugers verbunden ist. Diese Geräte sind sehr leicht und handlich. Die Sticks weisen niedrige Aufnahmeleistungen im Bereich von etwa 150 bis 600 W auf. Die erzielten Volumenströme sind entsprechend niedrig und liegen in einer Größenordnung von 10 bis 30 I/s. Das Filtergehäuse ist typischerweise zylindrisch und hat ein geringes Volumen (ca. 1 bis 2 Liter). Meist wird als Filter ein Zyklonabscheider verwendet. Der Zyklonabscheider beschleunigt die Saugluft und die darin enthaltenen Partikel. Dadurch wird ein erheblicher Teil der zur Verfügung stehenden Leistung verbraucht und es bleibt nur wenig Leistung für die Erzeugung eines ausreichenden Volumenstroms übrig. Die Reinigungswirkung (Staubaufnahme) ist oft unbefriedigend.

Ein Filterbeutel aus modernen Vliesstofflaminaten erfüllt die Abscheidung von Staub wesentlich energieeffizienter. Es ist allerdings schwierig einen Filterbeutel zu produzieren, der optimal in den sehr kleinen zur Verfügung stehenden Bauraum passt und eine ausreichende Filteroberfläche zur Verfügung stellt.

Außerdem ist besonders bei solchen handgehaltenen Geräten eine einfache Handhabung bedeutend, und zwar sowohl beim Einlegen der leeren Filterbeutel als auch beim Entnehmen der gefüllten Filterbeutel.

Aus der WO 2006/025249 A1 ist eine elektrische Reinigungsvorrichtung bekannt. Es wird ein Staubsammelbeutel offenbart, der mehrere Seitenfalten aufweist.

Aus der DE 10 2017 111 837 A1 ist auch ein Staubfilterbeutel mit Mehrfachfalte bekannt. Der als Flachbeutel ausgebildete Staubfilterbeutel umfasst eine eine Einlassöffnung enthaltende Oberwand und eine dieser gegenüberliegende Unterwand. Dabei ist vorgesehen, dass die Oberwand und die Unterwand aus schweißbarem flexiblem Material bestehen, dass die Oberwand und die Unterwand ihrem Umfang entlang umlaufend miteinander verschweißt sind oder einstückig durch Verschweißen eines Schlauchstücks gebildet sind, dass der Flachbeutel an mindestens einer Beutelseite zum Beutelinneren hin eingefaltet ist, so dass an der jeweiligen Beutelseite eine über die ganze Faltenlänge ausstülpbare Mehrfachfalte ausgebildet ist. Die Mehrfachfalte bildet in einem Betriebsstadium vor dem Ausstülpen zumindest drei mit dem Beutelinneren verbundene Aufnahmeräume.

Die EP 2 452 603 A1 offenbart einen gefalteten Staubsaugerfilterbeutel. Die Beutelwand des Staubsaugerfilterbeutels umfasst eine erste Seitenwand und eine zweite Seitenwand, wobei auf der ersten Seitenwand eine Halteplatte angeordnet ist, und wobei die Beutelwand eine Faltung aufweist, bei der die erste Seitenwand und die zweite Seitenwand gemeinsam in eine Richtung zur Oberseite der ersten Seitenwand hin gefaltet sind, und die Beutelwand wenigstens eine weitere Faltung aufweist, bei der die erste Seitenwand und die zweite Seitenwand gemeinsam in einer Richtung von der Oberseite der ersten Seitenwand weg gefaltet sind.

Aus der DE 20 2018 102 370 U1 ist ein Staubsaugerfilterbeutel mit Folie im Bereich der Halteplatte bekannt.

Die JP 2001-204661 A offenbart einen Staubsaugerfilterbeutel, der sich gleichmäßig in der Staubsammelkammer des Staubsaugers ausdehnen kann. Dafür weist der Beutel mehrere Seitenfalten auf.

Ein wichtiger Punkt bei Filterbeuteln mit Falten, etwa Seitenfaltenbeuteln, ist die funktionssichere Entfaltung des Beutels im Bauraum des Staubsaugers. Ein Seitenfaltenbeutel wird typischerweise im gefalteten Zustand ausgeliefert. Der Beutel wird auch im gefalteten Zustand ins Gerät eingelegt. Die Entfaltung ist oft schwierig und es bleibt dann Beutelfläche wegen der unvollständigen Entfaltung für die Filtration ungenutzt.

Die Ausdehnung durch die Füllung eines Beutels führt oft dazu, dass der Beutel an der Gehäusewand anliegt und/oder sich zwischen Gehäuserippen verklemmt. Die Entnahme wird dann schwierig. Gewünscht ist eine möglichst einfache Entnahme. Optimal wäre es, wenn der

Beutel nach dem Öffnen des Gehäuses - ohne ihn anfassen zu müssen - herausgeschüttet werden könnte.

Benötigt werden außerdem Filterbeutel, die für Bauräume unterschiedlichster Geometrie geeignet sind. Dies können z. B. zylindrische, quaderförmige und Bauformen mit ovalen Querschnitten sein.

Aufgabe der Erfindung ist es daher, einen einfach zu handhabenden Staubsaugerfilterbeutel, insbesondere einen Staubsaugerfilterbeutel für einen Handstaubsauger und/oder einen Stick-Staubsauger, bereitzustellen, der den zur Verfügung stehenden Bauraum möglichst optimal nutzt und eine ausreichende Filteroberfläche zur Verfügung stellt.

Diese Aufgabe wird durch einen Staubsaugerfilterbeutel gemäß Anspruch 1 gelöst. Besonders vorteilhafte Weiterbildungen finden sich in den Unteransprüchen.

Die Erfindung stellt also einen Staubsaugerfilterbeutel bereit umfassend ein Bodenelement, ein Deckelement, wobei im Deckelement eine Einströmöffnung vorgesehen und mit dem Deckelement eine die Einströmöffnung wenigstens teilweise umgebende Halteplatte verbunden ist, und wenigstens vier Zwischenelemente, die zwischen dem Bodenelement und dem Deckelement angeordnet sind, und jeweils eine mit der Einströmöffnung des Deckelements fluchtende Durchgangsöffnung umfassen, wobei die Zwischenelemente als Filterelemente ausgebildet sind und jeweils einen Vliesstoff und/oder ein Faservlies umfassen, wobei das unmittelbar an das Bodenelement anschließende Zwischenelement mit dem Bodenelement entlang des äußeren Randes des Zwischenelements oder entlang des Randes der Durchgangsöffnung verbunden ist, und wobei benachbarte Zwischenelemente abwechselnd entlang des Randes der Durchgangsöffnungen und entlang deren äußeren Rand miteinander verbunden sind.

Die Zwischenelemente sind also abwechselnd an deren äußeren Rand und am Innenrand des Durchgangslochs verbunden, sodass eine Zick-Zack Faltung der Beutelwand entsteht. Dadurch ist eine Ausdehnung in axialer Richtung möglich, also längs der Achse, die durch die Mittelpunkte der Einströmöffnung und der Durchgangsöffnungen definiert wird. Die Ausdehnung in axialer Richtung erfolgt durch das Auseinanderklappen der Faltenschenkel, also jenes Bereichs der Zwischenelemente 4, der zwischen der Verbindung am äußeren Rand der Zwischenelemente und der Verbindung am Rand der Durchgangsöffnung liegt. In radialer Richtung ist der Beutel jedoch fixiert, kann sich also in radialer Richtung nicht ausdehnen. In Folge dessen ist sowohl das Einlegen, wie auch die Entnahme des Beutels sehr einfach, da der Durchmesser des Beutels sich im Gebrauch nicht vergrößert. Der Beutel kann sehr platzsparend zusammengefaltet werden, und er entfaltet sich automatisch und zwar nur in axialer Richtung. Ein Entfalten vor dem Einlegen ist nicht notwendig. Durch die Faltung kann dennoch eine möglichst große Filterfläche zur Verfügung gestellt werden. Außerdem kann die Geometrie des Beutels durch die Geometrie der Zwischenelemente, des Bodenelements und des Deckelements bestimmt werden, sodass der zur Verfügung stehende Bauraum möglichst optimal genutzt werden kann.

Der Staubsaugerfilterbeutel kann insbesondere für Handstaubsauger und/oder einen sogenannten Stick-Staubsauger, insbesondere für kabellose Modelle, vorgesehen sein. Das Füllvolumen kann daher im voll ausgefalteten Zustand zwischen 0,5 und 3 Litern, insbesondere zwischen 0,5 und 2 Litern liegen.

Die Zwischenelemente können deckungsgleich ausgebildet sein. Ebenso kann das Deckelement deckungsgleich zu den Zwischenelementen ausgebildet sein. Schließlich kann auch die Außenkontur des Bodenelements der des Deckelements und der Zwischenelemente entsprechen. Dadurch können geometrisch einfache Beutel bereitgestellt werden.

Es ist aber auch denkbar, dass durch Kombination unterschiedlicher Durchmesser bzw. Formen komplexere Beutelformen realisiert werden. Beispielsweise können konische Beutel oder asymmetrische Formen gebildet werden.

Das Bodenelement kann luftundurchlässig sein und/oder an der dem Beutelinneren abgewandten Seite ein Oberflächenprofil, insbesondere ein oder mehrere Erhebungen, aufweisen. Das Profil am Bodenelement kann helfen, die Luft zur Ansaugöffnung des Motors zu führen, oder um die Kunststoffscheibe vom Boden wenigstens teilweise zu beabstanden. Die Ansaugöffnung befindet sich bei solchen Handstaubsaugern nämlich häufig am Boden des Bauraums, der zur Aufnahme des Filterbeutels vorgesehen ist. Durch ein luftundurchlässiges Bodenelement kann vermieden werden, dass der Hauptluftstrom durch das Bodenelement direkt zur Ansaugöffnung gelangt. Stattdessen kann die größere durch die Zwischenelemente gebildete Seitenwandung des Beutels zur Filtration genutzt werden.

Das Bodenelement kann beispielsweise aus Kunststoff oder Karton gebildet sein.

Es ist aber auch möglich, das Bodenelement aus einem Filtermaterial zu bilden, insbesondere aus einem für ein oder mehrere Zwischenelemente verwendeten Material.

Die Zwischenelemente umfassen ein luftdurchlässiges Material und sind insbesondere als Filterelemente ausgebildet. Die Zwischenelemente können mehrlagig aufgebaut sein. Man spricht dann auch von einem Laminat. Mehrere Lagen des Laminats, insbesondere jede Lage des Laminats, können dabei einen Vliesstoff und/oder ein Faservlies umfassen oder daraus bestehen.

Die Zwischenelemente können grundsätzlich auch aus unterschiedlichen Laminaten aufgebaut werden. Beispielsweise kann die Luftdurchlässigkeit im unteren Bereich des Beutels anders eingestellt werden als im oberen Bereich. Dies ist z.B. bei konischen Beuteln interessant.

Auch die Entfaltung bzw. das Füllverhalten des Beutels lassen sich so beeinflussen.

Als Material für die Zwischenelemente können verschiedenste Kunststoffe verwendet werden, beispielsweise Polypropylen und/oder Polyester. Die Zwischenelemente können ebenfalls Kunststoff-Recyclat und/oder recycliertes Material aus der Herstellung von Textilien (Textil Left-Over - TLO) umfassen oder daraus bestehen.

Für viele Kunststoff-Recyclate bestehen einschlägige internationale Normen. Für PET-Kunststoff-Recyclate ist beispielsweise die DIN EN 15353:2007 einschlägig. PP-Recyclate werden in DIN EN 15345:2008 charakterisiert. Zum Zwecke der entsprechenden speziellen Kunststoff-recyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Recycliertes Polyethylenterephthalat (rPET) kann beispielsweise aus Getränkeflaschen, insbesondere aus sog. Bottleflakes, also Stücke gemahlener Getränkeflaschen, erhalten werden.

Die recyclierten Kunststoffe, insbesondere recycliertes PET und/oder recycliertes PP, sowohl in der metallisierten, als auch in der nicht metallisierten Fassung, können zu den entsprechenden Fasern versponnen werden, aus denen die entsprechenden Stapelfasern bzw. Meltblownoder Spunbond-Vliesstoffe für die Zwecke der vorliegenden Erfindung hergestellt werden können.

Recycliertes Material aus der Herstellung von Textilien (TLO) fällt insbesondere bei der Prozessierung von Textilmaterialien (insbesondere Textilfasern und -filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese pulver- und/oder faserförmigen Materialien stellen Abfallmaterialien dar, die sich auf den zur Verarbeitung der Textilien verwendeten Maschinen oder Filtermaterialien absetzen können. Die Stäube (Pulver) bzw. Fasern werden normalerweise entsorgt und thermisch verwertet.

Bei dem pulver- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "pre-consumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls pulverund/oder faserförmiges recycliertes Material; hier spricht man von "post-consumer waste".

Das recyclierte Material aus der Herstellung von Textilien, TLO, kann also insbesondere Fasern und oder Filamente, die aus Abfallmaterialien aus der Textil- und Bekleidungsindustrie, aus Post-Consumer-Abfall (Textilien und ähnliches) und/oder aus Produkten, die für das Recycling gesammelt wurden, gewonnen wurden, umfassen.

Im Sinne der vorliegenden Erfindung bezeichnet ein Vliesstoff ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden. Die für ein Aufwickeln minimal erforderliche Bahnspannung beträgt 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies oder kurz nur "Vlies" genannt entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO9092:1988 bzw. CEM Standard EN29092 verwendet. Details zur Verwendung der hierin beschriebenen Definitionen und/oder Verfahren lassen sich auch dem Standardwerk "Vliesstoffe", W. Albrecht, H. Fuchs, W. Kittelmann, Wiley-VCH, 2000, entnehmen.

Für die Zwischenelemente kann sowohl ein Vliesstoff als auch ein Faservlies Verwendung finden.

Die Zwischenelemente können insbesondere einen Stapelfaservliesstoff und/oder einen Extrusionsvliesstoff umfassen. Insbesondere können Filamentspinnvliesstoffe (auch kurz "Spinnvliesstoff" oder "Spunbond") und/oder Meltblown-Vliesstoff Verwendung finden.

Die Zwischenelemente können ein kardiertes Material umfassen. Als Bindeschritt kommen dabei sowohl mechanische Verfahren (z.B. Vernadeln) als auch thermische Verfahren (z.B. Kalandrieren) in Frage. Ebenfalls möglich ist die Verwendung von Bindefasern oder Klebemitteln, etwa einem Latexkleber. Auch Airlaid Materialien sind möglich.

Der Vliesstoff der Zwischenlagen kann Bikomponentenfasern umfassen. Bikomponentenfasern (BiCo-Fasern) können aus einem Kern sowie einem den Kern umhüllenden Mantel gebildet sein. Neben Kern/Mantel Bikomponentenfasern können auch die anderen gebräuchlichen Varianten von Bikomponentenfasern, z. B. side-by-side, verwendet werden.

Die Bikomponentenfasern können als Stapelfasern vorliegen oder als Filamente bei einem Extrusionsvliesstoff (beispielsweise Meltblownvliesstoff) ausgebildet sein.

Entsprechend unverfestigte Faservliese sind wie erwähnt auch denkbar.

Die Zwischenelemente können insbesondere jeweils eine Kapazitätslage umfassen. Eine Kapazitätslage bietet einen hohen Widerstand gegenüber Stoßbelastung, und ermöglicht ein Filtern von großen Schmutzpartikeln, ein Filtern eines signifikanten Anteils von kleinen Staubpartikeln und ein Speichern bzw. Zurückhalten von großen Mengen an Partikeln, wobei der Luft ein einfaches Durchströmen erlaubt wird, und somit ein geringer Druckabfall bei hoher Partikelbeladung resultiert.

Die Zwischenelemente können auch jeweils eine Feinfilterlage umfassen. Eine Feinfilterlage dient der Erhöhung der Filtrationsleistung des mehrlagigen Filtermaterials durch Einfangen von Partikeln, die beispielsweise durch die Schutzlage und/oder die Kapazitätslage hindurch gelangen. Zur weiteren Erhöhung der Abscheideleistung kann die Feinfilterlage bevorzugt elektrostatisch (z.B. durch Coronaentladung oder Hydrocharging) aufgeladen werden, um insbesondere die Abscheidung von Feinstaubpartikeln zu erhöhen.

Die Feinfilterlage kann sich insbesondere zur Außenseite der Beutelwand hin an die Kapazitätslage anschließen.

An die Feinfilterlage kann noch eine Stützlage anschließen. Eine Stützlage (manchmal auch "Verstärkungslage" genannt) ist dabei eine Lage, die dem mehrlagigen Verbund des Filtermaterials die notwendige mechanische Festigkeit verleiht. Bei der Stützlage kann es sich insbesondere um einen offenen, porösen Vliesstoff mit leichtem Flächengewicht handeln. Bei der Stützlage kann sich insbesondere um einen Spinnvliesstoff handeln.

Es ist aber auch möglich ein einlagiges Filtermaterial für die Zwischenelemente einzusetzen. In diesem Fall kann es sich insbesondere um einen Meltblown-Vliesstoff handeln. Ein geeignetes Material für eine solche einlagige Beutelwand ist beispielsweise aus der EP 2 311 360 B1 bekannt.

Das Deckelement und/oder das Bodenelement können ebenfalls als Filterelemente ausgebildet sein. Sie können dann eines oder mehrere der eben für die Zwischenelemente offenbarten Merkmale aufweisen. Gemäß einem einfachen Beispiel können die Zwischenelemente, das Bodenelement und das Deckelement aus dem gleichen Material gefertigt sein.

Das Verhältnis der maximalen Ausdehnung der Zwischenelemente zum Durchmesser der jeweiligen Durchgangsöffnung kann maximal 4, insbesondere maximal 3, betragen. Der Beutel kann also recht kompakt ausgebildet sein. Die verhältnismäßig großen Durchgangsöffnungen ermöglichen es, den Staub gleichmäßig im Beutel zu verteilen.

Der Durchmesser der Durchgangsöffnungen der Zwischenelemente kann wenigstens 2 cm, insbesondere wenigstens 5 cm betragen. Der Durchmesser der Durchgangsöffnungen der Zwischenelemente kann insbesondere gleich dem Durchmesser der Einströmöffnung des Deckelements sein.

Die maximale Ausdehnung der Zwischenelemente kann weniger als 20 cm, insbesondere weniger als 15 cm betragen. Im Falle von Kreisscheiben als Zwischenelemente entspricht die maximale Ausdehnung der Zwischenelemente dem (konstanten) Durchmesser.

Alle Zwischenelemente können gleich aufgebaut sein. Es ist aber auch denkbar, dass wenigstens zwei Zwischenelemente einen unterschiedlichen Aufbau aufweisen.

Die Zwischenelemente können scheibenförmig ausgebildet sein, insbesondere mit einem kreisrunden, einem ovalen oder einem eckigen Querschnitt. Als Scheibe wird hierin ein geometrischer Körper in Form eines Zylinders verstanden, dessen maximale radiale Erstreckung um ein Vielfaches höher ist als seine axiale Dicke. Die Zwischenelemente erstrecken sich dann überwiegend in einer Ebene.

Die Zwischenelemente können aber auch eine dreidimensionale, 3-D, Form aufweisen. Damit ist gemeint, dass sich die Zwischenelemente nicht nur in einer Hauptebene erstrecken, mit einer gewissen Materialdicke senkrecht dazu, sondern, dass sie eine vorherbestimmte Form aufweisen, die sich auch außerhalb dieser Hauptebene erstreckt. Die Zwischenelemente können beispielsweise konvex oder konkav gekrümmt sein. Der Rand der Zwischenelemente kann ungekrümmt, also eben ausgebildet sein. Anschaulich gesprochen können sie schüsselförmig oder tellerförmig sein, jeweils mit oder ohne Rand.

Dabei ist es auch möglich, dass ein innerer radialer Bereich der gekrümmten Zwischenelemente gewellt ausgebildet ist. Der Randbereich kann dabei flach, also ungekrümmt, ausgebildet sein. Dadurch wird eine definierte Kontaktfläche bereitgestellt. Es ist auch möglich, auf der Oberfläche der Kontaktfläche, also im Verbindungsbereich der Zwischenelemente, Erhebungen und Vertiefungen einzubringen. Dadurch lässt sich die Verschweißung und/oder Verklebung optimieren. Der Übergang vom Rand zum inneren Bereich kann unter verschiedensten Winkeln oder Radien erfolgen. So sind anschaulich gesprochen unterschiedliche Höhen der Schüsseln, Teller oder Becher realisierbar. Die Strukturierung der Zwischenelemente kann insbesondere durch Prägung realisiert werden.

Das Bodenelement kann transparent ausgebildet sein. Dadurch kann festgestellt werden, wieviel Sauggut bereits im Beutel angesammelt wurde.

Die Halteplatte des Staubsaugerfilterbeutels, welche die Einströmöffnung des Deckelements wenigstens teilweise umgibt, kann an eine Halteeinrichtung in einem Staubsaugergehäuse anbringbar sein. Dadurch kann die Halteplatte im Staubsaugergehäuse in einer vorbestimmten Position anordenbar, insbesondere fixierbar, sein. Die Halteplatte kann eine Durchgangsöffnung aufweisen, welche mit der Einströmöffnung des Deckelements fluchtet, so dass die zu reinigende Luft in das Innere des Staubsaugerfilterbeutels strömen kann.

Die Halteplatte kann einen Kunststoff umfassen oder aus einem oder mehreren Kunststoffen bestehen. Insbesondere können recyclierte Kunststoffe Verwendung finden, wie etwa recycliertes Polypropylen, rPP, und/oder recycliertes Polyethylenterephthalat, rPET.

Die Halteplatte kann ein Verschlusselement zum Verschließen der Einströmöffnung umfassen. Dadurch kann das Sauggut insbesondere beim Entnehmen des Beutels im Beutelinneren zurückgehalten werden.

Die Zwischenelemente können unterschiedlich ausgebildet sein, insbesondere unterschiedliche Materialien und/oder unterschiedliche Materialparameter aufweisen. Die daraus resultierenden unterschiedlichen Filtereigenschaften können vorteilhaft sein, um bestimmte Strömungswege zu vereinfachen oder zu erschweren. Als Materialparameter können beispielsweise die Dicke, die Grammatur und/oder die Luftdurchlässigkeit herangezogen werden. Wie oben erwähnt, können sich die Zwischenelemente auch in ihrem Aufbau unterscheiden.

Die Verbindung der Zwischenelemente untereinander beziehungsweise zum Bodenelement und Deckelement kann über Kleben und/oder Verschweißen erfolgen. Die Elemente können also entsprechend verklebt und/oder verschweißt sein. Es ist auch denkbar, dass die Elemente entlang des äußeren Randes verschweißt und entlang des Randes der Durchgangsöffnungen verklebt sind, oder umgekehrt.

Es ist vorteilhaft, die Materialien im Bereich der Verschweißung und/oder Verklebung vorzuverdichten. Damit ist gemeint, dass die Materialien unter Einwirkung von Wärme oder Ultraschall gepresst werden und so eine verdichtete Struktur ausbilden.

Eine Verklebung kann mittels einem Schmelzklebstoff und ein Verschweißen über Ultraschallschweißen geschehen. Für manche Kunststoffe sind auch andere Schweißverfahren möglich. Beispielsweise können auch Hochfrequenzschweißen und/oder Rotationsreibschweißen eingesetzt werden. Insbesondere bei Polyethylenterephthalat, PET, - auch in Verbindung mit TLO - kann das Hochfrequenzschweißen eine vorteilhafte Variante sein.

Die Erfindung stellt außerdem ein Verfahren zur Herstellung eines Staubsaugerfilterbeutels gemäß Anspruch 12 bereit, insbesondere zur Herstellung eines oben beschriebenen Staubsaugerfilterbeutels.

Das Verfahren kann ein Bereitstellen eines Deckelements umfassen, wobei im Deckelement eine Einströmöffnung vorgesehen ist, und Verbinden des Deckelements mit einem zweiten der Zwischenelemente, sodass die Einströmöffnung mit der Durchgangsöffnung des Zwischenelements fluchtet.

Das Verfahren kann außerdem ein Vorverdichten der Verbindungsbereiche der Zwischenelemente, des Bodenelements und/oder des Deckelements umfassen. Dadurch kann eine festere Verbindung erzielt werden. Das Vorverdichten kann durch Ultraschallschweißen, thermisches Schweißen oder durch Druckbeaufschlagung erfolgen.

Die Zwischenelemente können ohne das erste und zweite Zwischenelement zunächst paarweise entlang ihres äußeren Randes miteinander verbunden werden und dann die paarweise verbundenen Zwischenelemente entlang des Randes der Durchgangsöffnungen untereinander oder mit dem ersten oder zweiten Zwischenelement verbunden werden.

Das Verfahren kann außerdem ein Anordnen von zwei Filtermaterialelementen übereinander umfassen. Dies kann durch Faltung einer Filtermaterialbahn erfolgen. Alternativ können auch zwei Filtermaterialbahnen aufeinander abgewickelt werden.

Im Falle von Laminaten, die eine Kapazitätslage umfassen, können die Bahnen so überlagert werden, dass die Kapazitätslagen zueinander weisen.

Bei den zu bildenden Zwischenelementen ohne das erste und zweite Zwischenelement kann eine Durchgangsöffnung in beide Filtermaterialelemente gestanzt werden. Die beiden Filtermaterialelemente können durch die Schweißung der äußeren Kontur der späteren Zwischenelemente miteinander verbunden werden. Der Schweißbereich kann vorverdichtet werden.

Die verschweißten Filtermaterialelemente können dann entlang der geschweißten Konturen gestanzt werden, sodass paarweise verbundenen Zwischenelemente erhalten werden. Auch ist es denkbar, das Stanzen vor dem Verbinden durchzuführen und/oder statt einer Schwei-βung eine Verklebung zum Verbinden zu verwenden.

Die für die Beutelform benötigte Anzahl an miteinander verbundenen Zwischenelementpaare werden nacheinander verbunden. Dabei kann der Verbindungsbereich wiederum vorverdichtet werden.

Abschließend können das Bodenelement und das damit verbundene erste Zwischenelement sowie das Deckelement und das damit verbundene zweite Zwischenelement mit den miteinander verbundenen Zwischenelementpaaren verbunden werden.

Weitere Merkmale und Vorteile der Erfindung werden nachfolgend anhand der beispielhaften Figuren beschrieben. Dabei zeigt:
- Figur 1: einen Querschnitt durch einen beispielhaften Staubsaugerfilterbeutel im zusammengefalteten Zustand;
- Figur 2: einen Querschnitt durch einen beispielhaften Staubsaugerfilterbeutel im ausgefalteten Zustand;
- Figur 3: ein Bodenelement eines beispielhaften Staubsaugerfilterbeutels; und
- Figuren 4A und 4B: eine Draufsicht auf und einen Querschnitt durch Zwischenelemente eines beispielhaften Staubsaugerfilterbeutels.

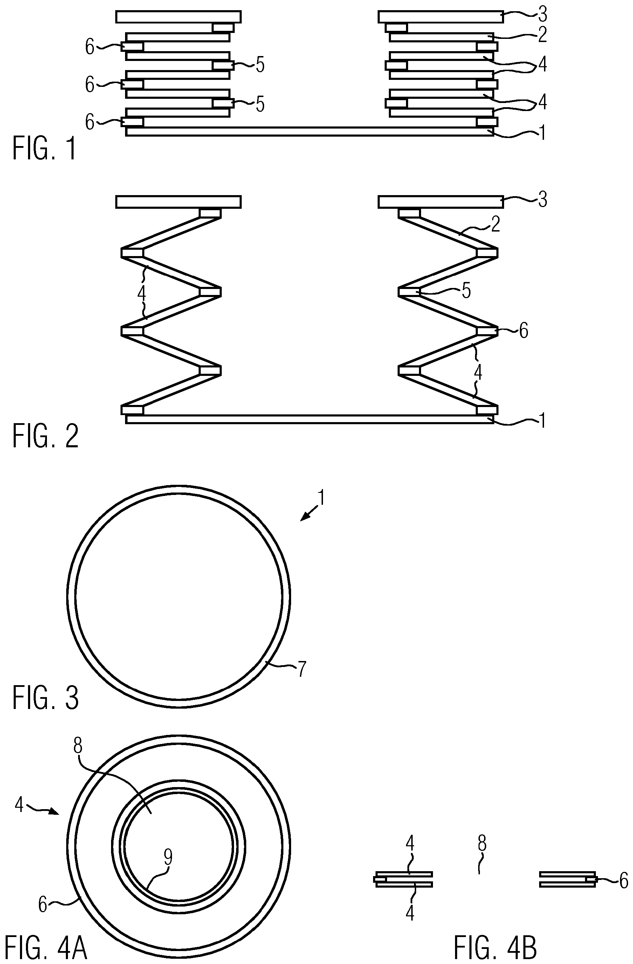

Figur 1 zeigt einen Querschnitt durch einen beispielhaften Staubsaugerfilterbeutel im zusammengefalteten Zustand. Der Staubsaugerfilterbeutel umfasst ein Bodenelement 1, welches im einfachsten Beispiel ein Filterelement ist, aber auch luftundurchlässig ausgebildet sein kann. Das beispielhafte Bodenelement 1 weist die Form einer Kreisscheibe auf.

Der Beutel umfasst außerdem ein Deckelement 2, welches eine Einströmöffnung in Form eines zentralen Durchgangslochs aufweist und ebenfalls als Filterelement ausgebildet sein kann. Mit dem Deckelement verbunden, insbesondere verschweißt oder verklebt, ist eine Halteplatte 3. Die Halteplatte 3 dient der Fixierung des Staubsaugerfilterbeutels in einer korrespondierenden Halterung in einem Gehäuse eines Staubsaugers. Die Halteplatte 3 weist ein mit der Einströmöffnung des Deckelements 2 fluchtendes Durchgangsloch auf.

Schließlich sind vier Zwischenelemente 4 vorgesehen, die zwischen dem Bodenelement 1 und dem Deckelement 2 angeordnet sind, und jeweils eine mit der Einströmöffnung des Deckelements 2 fluchtende Durchgangsöffnung umfassen.

Die Zwischenelemente 4 sind als Filterelemente ausgebildet sind und umfassen jeweils einen Vliesstoff und/oder ein Faservlies.

Das unmittelbar an das Bodenelement 1 anschließende Zwischenelement 4 ist mit dem Bodenelement 1 entlang des äußeren Randes des Zwischenelements 4 verbunden. Die Verbindung 6 kann durch eine Schweißverbindung oder eine Klebeverbindung realisiert sein.

Das unmittelbar an das Deckelement 2 anschließende Zwischenelement 4 ist mit dem Deckelement 2 ebenfalls entlang des äußeren Randes des Zwischenelements 4 verbunden. Die Verbindung 6 kann wiederum durch eine Schweißverbindung oder eine Klebeverbindung realisiert sein.

Dazwischen sind benachbarte Zwischenelemente 4 abwechselnd entlang des Randes der Durchgangsöffnungen und entlang deren äußeren Rand miteinander verbunden, sodass eine Zick-Zack Faltung gebildet wird. Die Verbindung 5 entlang des Randes der Durchgangsöffnungen kann wiederum durch eine Schweißverbindung oder eine Klebeverbindung realisiert sein. Mit anderen Worten ist jedes Zwischenelement 4 mit einem benachbarten Zwischenelement 4 entlang deren äußeren Rand und mit einem anderen Zwischenelement entlang des Randes der Durchgangsöffnungen verbunden. Es entsteht so ein Staubsaugerfilterbeutel, dessen Form einem Faltenbalg ähnelt.

Im zusammengefalteten Zustand sind die Zwischenlagen annähernd parallel angeordnet.

Wenn der Filterbeutel in den entsprechenden Bauraum eines Staubsaugers eingelegt wird, entfaltet er sich automatisch durch Wirkung der Schwerkraft und/oder durch den Saugluftstrom, allerdings nur in axialer Richtung, also entlang der Längsachse des Beutels. Dies ist in Figur 2 dargestellt. Die Faltenschenkel klappen sich auf, sodass sich der Beutel in Längsrichtung streckt. Die Mittelpunkte der Durchgangsöffnungen der Zwischenelemente 4 und die Mittelpunkte der Einströmöffnungen des Deckelements 2 und der Halteplatte 3 liegen auf dieser Längsachse. In radialer Richtung, also senkrecht zur Längsachse, dehnt sich der Beutel nicht aus, da die Zick-Zack-Falten an den Verbindungen 5, 6 fixiert sind.

Der so erhaltene Staubsaugerfilterbeutel eignet sich besonders für Handstaubsauger und insbesondere sogenannte Stick-Staubsauger, insbesondere für kabellose Akkusauger. Dadurch, dass der Staubsaugerfilterbeutel sich im Betrieb in radialer Richtung nicht ausdehnt, kann er auf einfache Weise aus dem Staubsauger entfernt werden. Idealerweise muss der Behälter des Staubsaugers, in dem sich der Beutel befindet, nur soweit gekippt werden, dass der Beutel durch Schwerkraftwirkung herausfällt.

Die erreichbare Länge des Staubsaugerfilterbeutels hängt von der Anzahl der Falten und der Faltentiefe ab, kann also genau vorherbestimmt und an den Bauraum des Staubsaugers angepasst werden. Im Beispiel der Figuren 1 und 2 sind zwei Falten zwischen dem Bodenelement 1 und dem Deckelement 2 vorgesehen. Es ist aber auch denkbar mehr als diese zwei Falten auszubilden. Beispielsweise können 6 - 8 Falten ausgebildet werden. In diesem Fall sind entsprechend mehr als vier Zwischenelemente 4 erforderlich. Der Durchmesser der Durchgangsöffnungen der Zwischenelemente 4 bestimmt wiederum zusammen mit deren äu-βeren Durchmesser die Faltentiefe. Bei einer höheren Anzahl an Falten kann die Dicke der Zwischenlagen reduziert werden, um die Packgröße zu reduzieren.

Figur 3 zeigt ein beispielhaftes Bodenelement 1, wie es für einen in den Figuren 1 und 2 gezeigten Beutel Anwendung finden kann. Dieses Bodenelement 1 in Form einer Kreisscheibe kann aus einem Filtermaterial bestehen. Es kann aber auch als eine Kunststoff- oder Pappscheibe ausgebildet sein. Im Falle einer Kunststoffscheibe kann diese auch transparent sein.

Das Bodenelement 1 kann ein Profil aufweisen, um die Luft zur Ansaugöffnung des Motors zu führen oder um das Bodenelement 1 vom Boden des Aufnahmebereichs des Staubsaugers wenigstens teilweise zu beabstanden.

Der äußere Rand 7 des Bodenelements 1 kann vorverdichtet werden, beispielsweise durch Ultraschallschweißen, thermisches Schweißen oder durch Druckbeaufschlagung.

Figur 4A zeigt ein beispielhaftes Zwischenelement 4 in Draufsicht. Es ist hier als Kreisring ausgebildet mit einer Durchgangsöffnung 8 im Zentrum. Der Rand 9 der Durchgangsöffnung 8 kann wiederum vorverdichtet werden.

Ein erstes solches Zwischenelement 4 kann beispielsweise entlang des äußeren Randes über eine Verbindung 6 mit dem Bodenelement 1 der Figur 3 verbunden werden. Daran anschließend kann ein weiteres solches Zwischenelement 4 vorgesehen sein, wobei die Zwischenelemente 4 am inneren Rand 9 der Durchgangsöffnungen 8 verbunden sind. Darauf folgt wiederum ein solches Zwischenelement 4, das mit dem äußeren Rand des vorherigen Zwischenelements 4 verbunden wird. Dies setzt sich fort, bis beispielsweise ein Beutel wie in Figuren 1 und 2 gezeigt erhalten wird.

Grundsätzlich wäre es auch möglich, das erste Zwischenelement entlang des Randes 9 der Durchgangsöffnung 8 mit dem Bodenelement zu verbinden. In diesem Fall erfolgt die Verbindung mit dem nächsten Zwischenelement 4 über den äußeren Rand der Zwischenelemente 4.

Statt einer oben beschriebenen sequentiellen Verbindung der Zwischenelemente 4, können die Zwischenelemente 4 auch erst paarweise verbunden werden. Ein Querschnitt für eine solche Doppelring-Struktur ist in Figur 4B gezeigt.

Eine oder mehrere solche Doppelringe können dann nacheinander auf eine Struktur aus Bodenelement 1 und erstem Zwischenelement 4 geklebt werden. Die Verbindung erfolgt jeweils am Rand der Durchgangsöffnungen 8. Abschließend folgt eine Struktur aus Deckelement 2 und zweitem Zwischenelement 4.

Im einfachsten Fall ist das Deckelement 2 gleich ausgebildet wie die Zwischenelemente 4. In diesem Fall ist die Struktur aus Deckelement 2 und zweitem Zwischenelement 4 eine Doppelring-Struktur wie in Figur 4B gezeigt. Hier wird schließlich eine Halteplatte 3 mit dem Deckelement 2 verbunden und so der entsprechende Filterbeutel erhalten.

Durch die beschriebene Beutelform können zahlreiche Vorteile erzielt werden.

Der Beutel kann sehr platzsparend zusammengefaltet werden und ist dennoch einfach einzulegen. Ein Entfalten vor dem Einlegen ist nicht notwendig.

Der Beutel entfaltet sich automatisch und zwar nur in axialer Richtung. Durch die Art der Faltung und Fixierung der Falten wird eine Ausdehnung in radialer Richtung verhindert.

Die Anzahl der Falten und die Tiefe der Falten bestimmt in Kombination mit der Länge des zur Verfügung stehenden Bauraumes die nutzbare Oberfläche des Beutels.

Die Entnahme ist sehr einfach, weil der Durchmesser des Beutels sich im Gebrauch nicht vergrößert.

Zur Anpassung an die Materialdicke kann die Anzahl der Faltungen geändert werden. Dünnere Materialien können mit mehr Falten verarbeitet werden als voluminösere Materialien.

Das nutzbare Volumen des Beutels wird auch über die Faltentiefe beeinflusst.

Die Halteplatte 3 kann einen halb- oder vollautomatischen Verschluss aufweisen.

Die Zwischenelemente 4 können aus unterschiedlichen Materialien bestehen. Die unterschiedlichen Filtereigenschaften können vorteilhaft sein, um bestimmte Strömungswege zu vereinfachen oder zu erschweren.

Das Bodenelement 1 des Beutels kann aus einem strukturierten und z. B. durch Lochung luftdurchlässigen Kunststoff bestehen. Dadurch kann eine Blockierung der Absaugung verhindert werden. Die volle Filterfläche bleibt nutzbar.

Die Bodenfläche kann alternativ aus einem Material mit besonders hoher Speicherfähigkeit gefertigt werden.

Der Beutel kann verschiedene Formen haben. Die Querschnitte können rund, oval, eckig, sternförmig sein. Dies wird lediglich über die Stanzform definiert.

Durch Kombination unterschiedlicher Durchmesser bzw. Formen sind auch komplexere Beutelformen realisierbar. Beispielsweise können konische Beutel oder asymmetrische Formen gebildet werden.

Ein beispielhaftes Herstellungsverfahren für einen oben beschriebenen Staubsaugerfilterbeutel umfasst die Schritte:
Anordnen von zwei Filtermaterialelementen übereinander. Dies kann durch Faltung einer Filtermaterialbahn erfolgen. Alternativ können auch zwei Filtermaterialbahnen aufeinander abgewickelt werden. Dabei weisen die Seiten der Materiallaminate, die eine Speicherlage enthalten, zueinander hin.

Für die Kombination aus Bodenelement und erstem Zwischenelement wird nur ein Loch in ein Filtermaterialelement eingebracht. Bei den Zwischenelementen und dem Deckelement wird das Mittelloch in beide Filtermaterialelemente gestanzt.

Die beiden Filtermaterialelemente werden durch die Schweißung der äußeren Kontur der späteren Elemente miteinander verbunden. Der Kleberbereich oder Schweißbereich kann vorverdichtet werden.

Die Zwischenelemente, das Deckelement und das Bodenelement werden ausgestanzt.

Die für die Beutelform benötigte Anzahl an Elementpaaren werden nacheinander aufeinander geklebt oder geschweißt. Dabei kann die Verbindungsfläche wiederum vorverdichtet werden. Abschließend bzw. beginnend wird die Halteplatte aufgeklebt oder geschweißt.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Staubsaugerfilterbeutel umfassend:
ein Bodenelement (1);
ein Deckelement (2), wobei im Deckelement eine Einströmöffnung vorgesehen und mit dem Deckelement (2) eine die Einströmöffnung wenigstens teilweise umgebende Halteplatte (3) verbunden ist; und
wenigstens vier Zwischenelemente (4), die zwischen dem Bodenelement (1) und dem Deckelement (2) angeordnet sind, und jeweils eine mit der Einströmöffnung des Deckelements (2) fluchtende Durchgangsöffnung (8) umfassen;
wobei die Zwischenelemente (4) als Filterelemente ausgebildet sind und jeweils einen Vliesstoff und/oder ein Faservlies umfassen;
wobei das unmittelbar an das Bodenelement (1) anschließende Zwischenelement (4) mit dem Bodenelement (1) entlang des äußeren Randes des Zwischenelements (4) oder entlang des Randes (9) der Durchgangsöffnung (8) verbunden ist; und
wobei benachbarte Zwischenelemente (4) abwechselnd entlang des Randes (9) der Durchgangsöffnungen (8) und entlang deren äußeren Rand (6) miteinander verbunden sind.

2. Staubsaugerfilterbeutel nach Anspruch 1, wobei die Zwischenelemente (4) deckungsgleich ausgebildet sind.

3. Staubsaugerfilterbeutel nach Anspruch 1 oder 2, wobei das Deckelement (3) deckungsgleich zu den Zwischenelementen (4) ausgebildet ist.

4. Staubsaugerfilterbeutel nach einem der vorangegangenen Ansprüche, wobei die Außenkontur des Bodenelements (1) der des Deckelements (2) und der Zwischenelemente (4) entspricht.

5. Staubsaugerfilterbeutel nach einem der vorangegangenen Ansprüche, wobei das Bodenelement (1) luftundurchlässig ist und/oder an der dem Beutelinneren abgewandten Seite ein Oberflächenprofil, insbesondere ein oder mehrere Erhebungen, aufweist.

6. Staubsaugerfilterbeutel nach einem der vorangegangenen Ansprüche, wobei das Verhältnis der maximalen Ausdehnung der Zwischenelemente (4) zum Durchmesser der jeweiligen Durchgangsöffnung (8) maximal 4, insbesondere maximal 3, beträgt.

7. Staubsaugerfilterbeutel nach einem der vorangegangenen Ansprüche, wobei die Zwischenelemente (4) scheibenförmig ausgebildet sind, insbesondere mit einem kreisrunden, einem ovalen oder einem eckigen Querschnitt.

8. Staubsaugerfilterbeutel nach einem der vorangegangenen Ansprüche, wobei das Bodenelement (1) transparent ausgebildet ist.

9. Staubsaugerfilterbeutel nach einem der vorangegangenen Ansprüche, wobei mit dem Bodenelement (1) ein luftdurchlässiges Element an der dem Beutelinhalt abgewandten Seite verbunden ist, wobei das luftdurchlässiges Element vollflächig oder unterbrochen ausgebildet ist.

10. Staubsaugerfilterbeutel nach einem der vorangegangenen Ansprüche, wobei die Halteplatte (3) ein Verschlusselement zum Verschließen der Einströmöffnung umfasst.

11. Staubsaugerfilterbeutel nach einem der vorangegangenen Ansprüche, wobei die Zwischenelemente (4) unterschiedlich ausgebildet sind, insbesondere unterschiedliche Materialien und/oder unterschiedliche Materialparameter aufweisen.

12. Verfahren zum Herstellen eines Staubsaugerfilterbeutels, insbesondere nach einem der vorangegangenen Ansprüche, umfassend die Schritte:
Bereitstellen eines Bodenelements (1);
Bereitstellen von wenigstens vier Zwischenelementen (4), die jeweils eine Durchgangsöffnung (8) umfassen, wobei die Zwischenelemente (4) als Filterelemente ausgebildet sind und jeweils einen Vliesstoff und/oder ein Faservlies umfassen;
Verbinden eines ersten Zwischenelements (4) mit dem Bodenelement (1) entlang des äußeren Randes des Zwischenelements (4) oder entlang des Randes (9) der Durchgangsöffnung (8);
Verbinden der übrigen Zwischenelemente (4) untereinander und mit dem ersten Zwischenelement derart, dass benachbarte Zwischenelemente (4) abwechselnd entlang des Randes (9) der Durchgangsöffnungen (8) und entlang deren äußeren Rand miteinander verbunden sind, wobei die Durchgangsöffnungen (8) miteinander fluchten.

13. Verfahren nach Anspruch 12, außerdem umfassend Bereitstellen eines Deckelements (2), wobei im Deckelement eine Einströmöffnung vorgesehen ist, und Verbinden des Deckelements mit einem zweiten der Zwischenelemente (4), sodass die Einströmöffnung mit der Durchgangsöffnung (8) des Zwischenelements (4) fluchtet.

14. Verfahren nach Anspruch 12 oder 13, außerdem umfassend ein Vorverdichten der Verbindungsbereiche der Zwischenelemente (4), des Bodenelements (1) und/oder des Deckelements (2).

15. Verfahren nach einem der Ansprüche12 bis 14, wobei die Zwischenelemente (4) ohne das erste und zweite Zwischenelement zunächst paarweise entlang ihres äußeren Randes miteinander verbunden werden und dann die paarweise verbundenen Zwischenelemente entlang des Randes (9) der Durchgangsöffnungen (8) untereinander oder mit dem ersten oder zweiten Zwischenelement verbunden werden.

## Claims

1. A vacuum cleaner filter bag comprising:
a bottom member (1);
a cover member (2), wherein an inflow opening is provided in the cover member and a holding plate (3) at least partially surrounding the inflow opening is connected to the cover member (2); and
at least four intermediate members (4) which are interposed between the bottom member (1) and the cover member (2) each comprising a through opening (8) aligned with the inflow opening of the cover member (2);
wherein the intermediate members (4) are configured as filter elements each comprising a nonwoven fabric and/or a fibrous web;
wherein the intermediate member (4) immediately adjoining the bottom member (1) is connected to the bottom member (1) along the outer edge of the intermediate member (4) or along the edge (9) of the through opening (8); and
wherein adjacent intermediate members (4) are alternately joined along the edges (9) of the through openings (8) and along the outer edge (6) thereof.

2. The vacuum cleaner filter bag according to claim 1, wherein the intermediate members are configured to be congruent.

3. The vacuum cleaner filter bag according to claims 1 or 2, wherein the cover member (3) is formed to be congruent with the intermediate members (4).

4. Vacuum cleaner filter bag according to any one of the preceding claims, wherein the outer contour of the bottom member (1) corresponds to that of the cover member (2) and the intermediate members (4).

5. The vacuum cleaner filter bag according to any one of the preceding claims, wherein the bottom member (1) is air-impermeable and/or has a surface profile, in particular one or more projections, on the side facing away from the bag interior.

6. The vacuum cleaner filter bag according to any one of the preceding claims, wherein the ratio of the maximum extension of the intermediate members (4) to the diameter of the respective through opening (8) is 4 at the most , in particular 3 at the most.

7. The vacuum cleaner filter bag according to any one of the preceding claims, wherein the intermediate members (4) are disc-shaped, in particular with a circular, an oval or a square cross-section.

8. The vacuum cleaner filter bag according to any of the preceding claims, wherein the bottom member (1) is transparent.

9. The vacuum cleaner filter bag according to any one of the preceding claims, wherein an air-permeable element is connected to the bottom member (1) on the side facing away from the bag interior, and the air-permeable element is formed as a full-surface element or an interrupted element.

10. The vacuum cleaner filter bag according to any one of the preceding claims, wherein the holding plate (3) comprises a closure member for closing the inflow opening.

11. The vacuum cleaner filter bag according to any one of the preceding claims, wherein the intermediate members (4) are formed in different ways, in particular including different materials and/or different material parameters.

12. A method of manufacturing a vacuum cleaner filter bag, in particular according to any one of the preceding claims, comprising the following steps:
providing a bottom member (1);
providing at least four intermediate members (4), each comprising a through opening (8), wherein the intermediate members (4) are configured as filter elements each comprising a nonwoven fabric and/or a fibrous web;
connecting a first intermediate member (4) to the bottom member (1) along the outer edge of the intermediate member (4) or along the edge (9) of the through opening (8);
connecting the remaining intermediate members (4) to each other and to the first intermediate member in such a way that adjacent intermediate members (4) are alternately joined along the edges (9) of the through openings (8) and along the outer edge thereof wherein the through openings (8) are aligned with each other.

13. The method according to claim 12, moreover comprising providing a cover member (2), wherein an inflow opening is provided in the cover member, and connecting the cover member to a second one of the intermediate members (4) such that the inflow opening is aligned with the through opening (8) of the intermediate member (4).

14. The method according to claims 12 or 13, further comprising precompressing the connection regions of the intermediate members (4), the bottom member (1) and/or the cover member (2).

15. The method according to any one of claims 12 to 14, wherein initially the intermediate members are connected to each other in pairs along their outer edges leaving out the first and second intermediate members followed by connecting the pairs of joined intermediate members to each other or to the first or second intermediate members along the edges (9) of the through openings (8).

## Revendications

1. Sacs filtrants pour aspirateurs comprenant :
un élément sol (1) ;
un élément couvercle (2), une ouverture d'entrée étant prévue dans l'élément couvercle et une plaque de maintien (3) entourant au moins partiellement l'ouverture d'entrée étant reliée à l'élément couvercle (2) ; et
au moins quatre éléments intermédiaires (4), qui sont disposés entre l'élément sol (1) et l'élément plafond (2), et qui comprennent chacun une ouverture de passage (8) alignée avec l'ouverture d'entrée de l'élément plafond (2) ;
les éléments intermédiaires (4) étant conçus sous forme d'éléments filtrants et comprenant chacun un non-tissé et/ou une nappe de fibres ;
l'élément intermédiaire (4) directement raccordé à l'élément de fond (1) étant relié à l'élément de fond (1) le long du bord extérieur de l'élément intermédiaire (4) ou le long du bord (9) de l'ouverture de passage (8) ; et
des éléments intermédiaires voisins (4) étant reliés entre eux alternativement le long du bord (9) des ouvertures de passage (8) et le long de leur bord extérieur (6).

2. Sac filtrant pour aspirateur selon la revendication 1, dans lequel les éléments intermédiaires (4) sont réalisés de manière à concorder.

3. Sac filtrant pour aspirateur selon la revendication 1 ou 2, dans lequel l'élément de couverture (3) est formé de manière à coïncider avec les éléments intermédiaires (4).

4. Sac filtrant pour aspirateur selon l'une des revendications précédentes, dans lequel le contour extérieur de l'élément de fond (1) correspond à celui de l'élément couvercle (2) et des éléments intermédiaires (4) .

5. Sac filtrant pour aspirateur selon l'une des revendications précédentes, dans lequel l'élément de fond (1) est imperméable à l'air et/ou présente un profil de surface, en particulier une ou plusieurs bosses, sur le côté opposé à l'intérieur du sac.

6. Sac filtrant pour aspirateur selon l'une des revendications précédentes, dans lequel le rapport entre l'extension maximale des éléments intermédiaires (4) et le diamètre de l'ouverture de passage (8) respective est de 4 au maximum, en particulier de 3 au maximum.

7. Sac filtrant pour aspirateur selon l'une quelconque des revendications précédentes, dans lequel les éléments intermédiaires (4) sont en forme de disque, notamment avec une section transversale circulaire, ovale ou polygonale.

8. Sac filtrant pour aspirateur selon l'une quelconque des revendications précédentes, dans lequel l'élément de fond (1) est transparent.

9. Sac filtrant pour aspirateur selon l'une des revendications précédentes, dans lequel un élément perméable à l'air est relié à l'élément de fond (1) sur le côté opposé au contenu du sac, l'élément perméable à l'air étant réalisé sur toute la surface ou de manière interrompue.

10. Sac filtrant pour aspirateur selon l'une des revendications précédentes, dans lequel la plaque de retenue (3) comprend un élément de fermeture pour fermer l'ouverture d'entrée.

11. Sac filtrant pour aspirateur selon l'une des revendications précédentes, dans lequel les éléments intermédiaires (4) sont réalisés différemment, en particulier présentent des matériaux différents et/ou des paramètres de matériau différents.

12. Procédé de fabrication d'un sac filtrant pour aspirateur, en particulier selon l'une des revendications précédentes, comprenant les étapes consistant à :
fournir un élément sol (1) ;
mettre à disposition au moins quatre éléments intermédiaires (4) qui comprennent chacun une ouverture de passage (8), les éléments intermédiaires (4) étant conçus sous la forme d' éléments filtrants et comprenant chacun un non-tissé et/ou une nappe de fibres ;
relier un premier élément intermédiaire (4) à l'élément de fond (1) le long du bord extérieur de l'élément intermédiaire (4) ou le long du bord (9) de l'ouverture de passage (8) ;
relier les autres éléments intermédiaires (4) entre eux et avec le premier élément intermédiaire de telle sorte que des éléments intermédiaires (4) voisins soient reliés entre eux en alternance le long du bord (9) des ouvertures de passage (8) et le long de leur bord extérieur, les ouvertures de passage (8) étant alignées entre elles.

13. Procédé selon la revendication 12, comprenant en outre la fourniture d'un élément couvercle (2), un orifice d'entrée étant prévu dans l'élément couvercle, et la connexion de l'élément couvercle à un deuxième des éléments intermédiaires (4) de telle sorte que l'orifice d'entrée soit aligné avec l'orifice de passage (8) de l'élément intermédiaire (4).

14. Procédé selon la revendication 12 ou 13, comprenant en outre un précompactage des zones de jonction des éléments intermédiaires (4), de l'élément sol (1) et/ou de l'élément plafond (2).

15. Procédé selon l'une des revendications 12 à 14, dans lequel les éléments intermédiaires (4) sans le premier et le deuxième élément intermédiaire sont d'abord reliés entre eux par paires le long de leur bord extérieur, puis les éléments intermédiaires reliés par paires sont reliés entre eux ou avec le premier ou le deuxième élément intermédiaire le long du bord (9) des ouvertures de passage (8).
